## Europäisches Patentamt
## European Patent Office
## Office européen des brevets

(11) Publication number: **0 021 795**
**B1**

# EUROPEAN PATENT SPECIFICATION

(45) Date of publication of patent specification: **04.07.84**

(51) Int. Cl.³: **F 16 L 21/08, F 16 L 37/08**

(21) Application number: **80302068.4**

(22) Date of filing: **19.06.80**

(54) Couplings for tubes.

(30) Priority: **20.06.79 GB 7921481**
**06.07.79 GB 7923594**

(43) Date of publication of application:
**07.01.81 Bulletin 81/1**

(45) Publication of the grant of the patent:
**04.07.84 Bulletin 84/27**

(84) Designated Contracting States:
**DE FR**

(56) References cited:
**EP - A - 0 003 746**
**DE - A - 2 721 807**
**DE - A - 2 754 055**
**DE - B - 1 927 153**
**FR - A - 2 356 868**
**FR - A - 2 380 483**
**GB - A - 2 007 322**
**US - A - 3 819 212**
**US - A - 4 005 883**
**US - A - 4 087 120**

(73) Proprietor: **JOHN GUEST (SOUTHERN) LIMITED**
**Horton Bridge Road**
**West Drayton Middlesex UB7 8JR (GB)**

(72) Inventor: **Guest, John Derek**
**"Iona" Cannon Hill Way Bray**
**Maidenhead Berkshire (GB)**

(74) Representative: **Rennie, Ian Malcolm et al,**
**BOULT, WADE & TENNANT 27 Furnival Street**
**London EC4A 1PQ (GB)**

Courier Press, Leamington Spa, England.

## Description

This invention relates to couplings for tubes and is more particularly concerned with a tube coupling of the kind having a collet with resilient arms arranged to co-operate with a cam surface on a member surrounding the collet, which member has an internal surface tapering in one axial direction and engaging the arms of the collet so that the arms are forced radially inwardly by axial movement of the collet in said one direction.

With such a tube coupling, the collet is arranged so that said one direction is the direction of withdrawal of the tube from the member. The end of the tube is pushed into the coupling in the opposite direction through the collet. Any outward pull on the tube with respect to said member tends, by the engagement between the collet and the tube, to pull the collet in said one direction thereby causing the arms, by engagement with the cam surface, to grip the tube more tightly. Such a coupling thus serves to hold the tube in said member; the end of the tube can be inserted directly into the coupling and is engaged thereby in a manner which prevents withdrawal of the tube merely by a pull thereon. The tube can be released however by pushing the collet inwardly into said member whilst pulling the tube outwardly. This release can only be effected by a deliberate action and not by an accidental pull on the tube.

It is commonly required to seal the tube in said coupling and it is the usual practice to provide an O-ring within the bore in said member inwardly of the collet, the O-ring fitting tightly around the end of the tube. If there is any leakage of fluid between the end of the tube and said member, the fluid pressure tends to force the O-ring back against the collet and thus serves not only to apply pressure to the collet in a direction tightening the grip of the collet arms and tube but also serves to deform the O-ring to hold it more tightly against the tube and the surrounding surface of said member.

FR—A—2380483, FR—A—2.356.868, GB—A—2007322 and U.S.—A—4005883 show examples of such quick release couplings employing an O-ring inwardly of the collet.

With such couplings, the higher the pressure of the fluid, the better is the seal. There are however often circumstances in which the advantages of the simple and quick making and releasing of the coupling would be desirable but in which the fluid pressure is low, for example below 1.38 bar (20 p.s.i.).

It is an object of the present invention to provide improved sealing at low pressures in a tube coupling of the kind described.

According to this invention, a releasable tube coupling of the kind having a collet with axially extending resilient arms arranged to co-operate with a cam surface on a body member surrounding the collet, which cam surface is tapered to a smaller diameter in one axial direction and engages the arms of the collet so that the collet arms are forced radially inwardly by axial movement of the collet in said axial direction whereby projections on the arms grip a tube inserted in the coupling and the collet arms being releasable to move radially outwardly by movement of the collet in the opposite axial direction; and in which a resilient annular member is provided in said body member for sealing around the tube is characterised in that said one direction is the direction of withdrawal of the tube from the body member and in that a threaded element engaging an internal thread in said body member or in a support in said body member is provided for applying pressure to and maintaining pressure on said annular element to compress it in the axial direction and so thereby deforming it radially inwardly, the threaded element being separate from the collet but engageable thereby so that the threaded element can be rotated by rotation of the collet. Operation of said compressing means thus enables the resilient annular member, which is conveniently an O-ring, to be forced into sealing engagement around the outer surfaces of a tube inserted into the coupling through the collet.

DE—AI—27 54 055 discloses a tube coupling which is not a releasable coupling but which has gripping elements for holding the tube, which gripping elements axially press an intermediate element against an O-ring, the axial and inward radial movement of the gripping elements being effected simultaneously by relative rotation of two parts of the body member, which parts are threaded together In this construction, the relative position of the two parts is determined by the requirement to position the gripping elements to grip the tube and there is no separate means for applying pressure to and maintaining pressure on the O-ring.

The present invention, on the other hand, provides a construction in which pressure is applied to and is maintained on the O-ring without requiring any axial movement of the collet.

When the resilient annular member is compressed in the axial direction, it expands radially inwardly and outwardly and it is thus forced into sealing engagement with the tube. The axial compression holds the resilient annular member in sealing engagement in the body or support, e.g. against a shoulder in said support and preferably the internal bore in said body or said support is such that the compression of the resilient member causes it to be forced into sealing engagement with the surrounding surface of said body or support. It will be seen therefore that, by adjustment of the position of said annular element, the resilient member can be deformed to give a tight seal irrespective of any fluid pressure of the fluid passing through the coupling, the resilient member being deformed to seal into surface irregularities in the tube surface. This is of particular importance in the case of low pressure fluids. If there is fluid leakage around the end of the tube onto the resilient annular member, and if the fluid pressure is sufficiently high to compress the resilient member further, it will improve the sealing. However the provision of the annular element enables the resilient member to be axially compressed even in the absence of any fluid pressure.

Very conveniently in such an arrangement, the collet and annular element are provided with mutually-engaging portions such that the annular element can be rotated in said support by rotation of the collet. For example the annular element may have a castellated end and the collet arms may be formed to engage in the castellations. Conveniently in such an arrangement, alternate arms of the collet are of different length and the castellations comprise recesses for receiving the longer collet arms.

In the simplest form, the support comprises a part of the body member. In this case, the annular element may have an external thread engaging an internal thread in a cylindrical portion of said body member. It may be preferred however in some cases to provide a support separate from the body member, the support being a holder for the resilient annular member and positioned within said body member, the annular element being threaded in said support for adjustment in the axial direction to enable the resilient member to be compressed between the annular element and a shoulder in the support and a further seal being provided between the support and said body member. This further seal may be another O-ring around the support. The support may be axially movable in said body member between a shoulder and the collet member but locked against rotation in the body member. It will be appreciated that commonly the problem is to obtain effective sealing against the tube, which may have an uneven surface. The annular element enables this seal to be obtained as in the previously described construction. The further seal effects the sealing between the support and the body member where the problems of sealing are less severe, bearing in mind that the surfaces to be sealed together are pre-formed as part of the coupling. The advantage of having the support axially movable in the body member is that, if there is high pressure fluid in the coupling, any leakage around the end of the tube will tend to move the support towards the collet and hence will tend to force the collet in the direction such that the collet arms are forced to grip the tube more tightly.

In a tube coupling for holding a tube of predetermined external diameter and wherein said resilient member is an O-ring around said tube adjacent a shoulder on the body member or on a support in the body member, which shoulder faces the end of the bore from which the collet is inserted in an internal bore in the body member, the bore in said body member having a tapered portion constituting said cam surface, said means for applying pressure to and maintaining pressure on said resilient member may be an annular element adjustable for movement to compress the O-ring against said shoulder so as thereby to cause the O-ring to seal tightly around said tube.

In another construction, the means for compressing the resilient annular member comprises a spring. Thus the invention includes within its scope a tube coupling having a collet with axially extending resilient arms arranged to co-operate with a cam surface on a body member surrounding the collet, which cam surface is tapered to a smaller diameter in an axial direction and engages the arms of the collet so that the collet arms are forced radially inwardly by axial movement of the collet in said axial direction whereby projections on the the arms grip a tube inserted in the coupling and the collet arms being releasable to move radially outwardly by movement of the collet in the opposite axial direction; and a resilient annular member in said body member for sealing around the tube characterised in that said one direction is the direction of withdrawal of the tube from the body member and in that spring means are provided between the collet and the resilient annular member for applying pressure to and maintaining pressure on said annular resilient member to compress it in the axial direction against a shoulder in said body member and so thereby deforming the resilient annular member radially inwardly.

In a tube coupling for holding a tube of predetermined external diameter and in which a resilient annular member forms a seal seated within a bore in the body member against a shoulder therein, which shoulder faces the end from which the collet is inserted, the means for applying pressure on said resilient member may be spring means in said bore operative to force the O-ring away from the ends of the collet arms towards said shoulder.

Preferably the O-ring is made, in the known way, to fit resilietnly over the tube. The axial pressure exerted by the spring means squeezes the O-ring in the axial direction and hence causes it to expand radially inwardly and outwardly. The O-ring is thus urged by the spring means into tight engagement with the tube and with the inner surface of the bore of said member surrounding the O-ring. In the absence of any fluid pressure on the O-ring, the O-ring is also forced against the shoulder in said member so as to seal against the shoulder as well as against the surface of the tube. The provision of the spring means thus serves to give a good seal against fluid leakage around the end of the tube, even in conditions where the fluid pressure is low. With a high fluid pressure, leakage will cause fluid pressure on the O-ring forcing it away from the shoulder against the spring means, so further tending to deform the O-ring in the radial direction and thereby improve the sealing against leakage.

Preferably the aforesaid member, axially inwardly of said shoulder, has a second shoulder of smaller diameter against which the end of the tube abuts, the tube therefore extending axially beyond the first-mentioned shoulder engaged by the O-ring.

The spring means conveniently comprises a spring washer, preferably having an annular surface extending continuously around the tube in a plane normal to the axis thereof, said surface arranged to bear against the O-ring, the spring washer further having resilient arms extending from this surface to bear against the end surfaces of the collet arms.

The following is a description of three embodiments of the invention, reference being made to the accompanying drawings in which:—

Figure 1 is a longitudinal section through part of a tube coupling;

Figures 2 and 3 are respectively a side elevation and end elevation of an adjustable element used in the construction of Figure 1, these figures being drawn to a different scale from Figure 1;

Figure 4 is a longitudinal section through part of another construction of tube coupling; and

Figures 5 and 6 are longitudinal sections through part of further tube couplings.

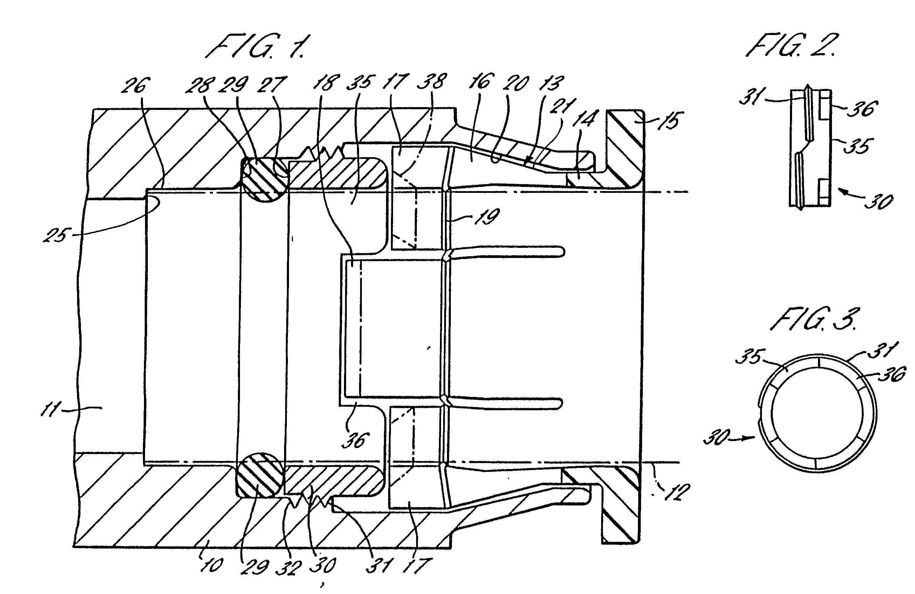

Referring to Figure 1, there is shown part of a tube coupling comprising a body member 10 having a bore 11 therethrough. A tube 12, shown in chain lines, is insertable into the coupling from the right-hand end thereof as seen in the drawing to be gripped by a collet 13 which has a cylindrical portion 14 terminated at its outer end by a flange 15 and having resilient arms 16 extending axially inwardly into said body member 10 from the cylindrical portion 14. In the particular embodiment illustrated, there are six such arms and these are alternately short arms 17 and long arms 18. The arms each have a projection 19 in its inner surface, the projections 19 lying in a plane normal to the axis of the collet. These projections serve to grip the tube 12. The collet may be made of metal or of plastics material; in the latter case, the projections 19 may be constituted by metal inserts. On their outer face, the collet arms 16 have a portion 21, the diameter of which increases in the axial direction into the coupling to form a tapered surface co-operating with a tapered cam surface 20 on the body member 10 such that, if the collet is moved outwardly, that is to the right in the drawing, the collet arms 16 are forced radially inwardly to grip the tube 12.

The tube 12 is inserted through the outer end of the collet, the right-hand end in the drawing, to extend through the collet and to abut against a shoulder 25 formed in the coupling member 10. This shoulder forms a stop for the tube and is constituted by the end of an enlarged diameter portion 26 of the bore 11. The internal diameter of this portion of the body member is made just sufficient to accommodate the tube 12. The collet fits in a still larger diameter part 27 of the member 10, which part is terminated by a second shoulder 28 and a resilient O-ring 29 is provided in the body member around the tube 12 adjacent the shoulder 28.

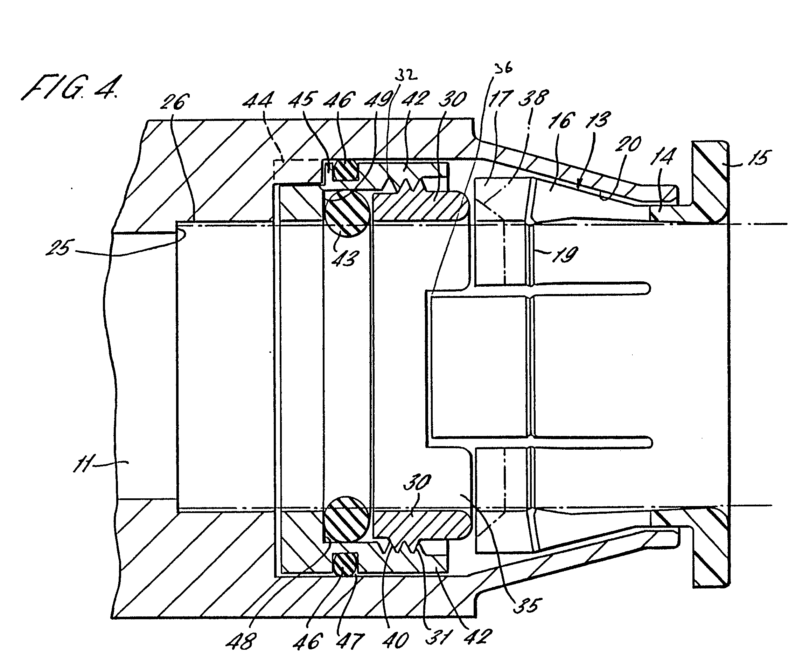

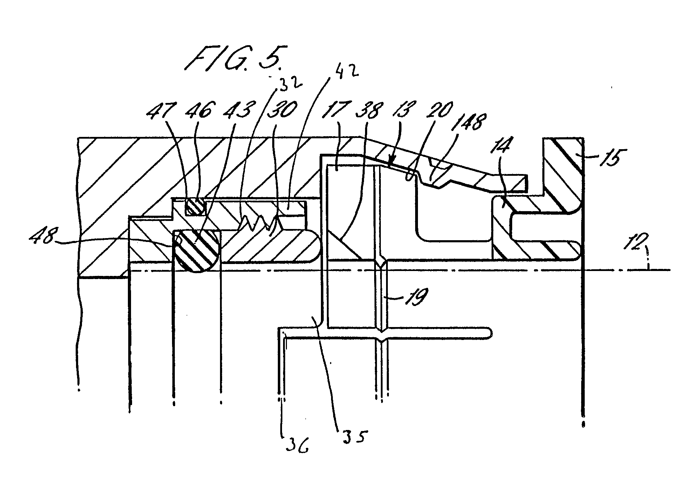

An annular element 30 (shown in further detail in Figures 2 and 3) having an external thread 31 engages an internal thread 32 in the body member so that, by rotation of this annular element 30, the O-ring 29 can be compressed in the axial direction. Such axial compression serves to expand the O-ring radially inwardly and outwardly. The O-ring is made of a size such that it fits closely over the tube 12 and thus the axial compression serves to force the O-ring into any irregularities in the tube and thereby to effect good sealing between the O-ring and the tube. The axial compression serves to force the O-ring against the shoulder 28 thereby sealing the O-ring in the body member and also serves to improve the sealing against the surrounding cylindrical surface of the body member.

To effect the required axial compression of the O-ring, the annular element 30 has to be adjusted axially and this can be effected by rotation of the annular element 30 in the body member. For this purpose, the outer end of the element 30 is castellated to mate with the inner end of the collet. In the particular embodiment illustrated, the collet arms are alternately of longer and shorter length and the castellation comprises projecting portion 35 extending towards the shorter arms 17 and recesses 36 to accommodate the longer arms 18 of the collet. Thus rotation of the collet in the body member 10 enables the annular element to be adjusted in position axially.

When a tube is to be released from a coupling, it is necessary to disengage the resilient arms 16 from the tube. For this purpose, the collet is moved axially inwardly into the body member 10 by pressing on the flange 15. The ends of the arms have sloping surfaces 38 which engage the surfaces of the annular element 30, the sloping faces 38 being arranged so that axial movement inwardly of the collet forces the collet arms radially outwardly.

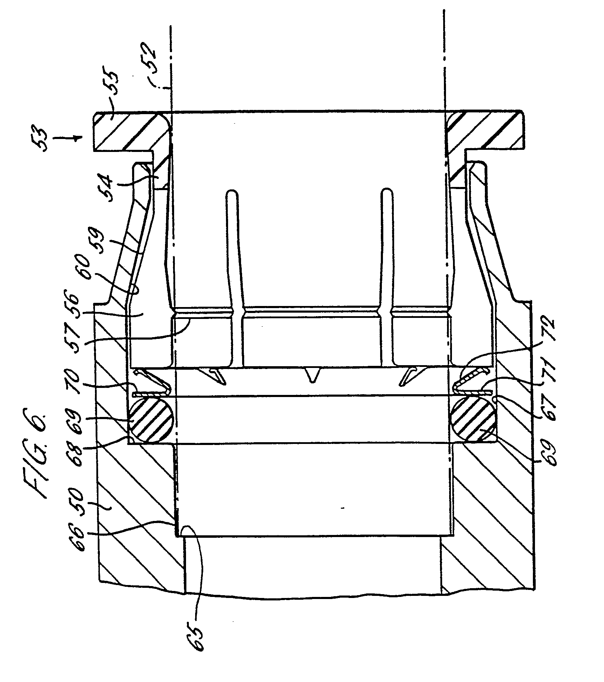

Figure 4 illustrates a modification of the construction shown in Figure 1 and, in the following description, the same reference characters are used to indicate corresponding features. Reference will be made in the following description only to those features which differ from the construction of Figure 1.

In Figure 4 the annular element 30, which is similar to that shown in Figures 1, 2 and 3, has an external thread 31 which, in the construction of Figure 4, engages an internal thread 40 in a support 42, for the O-ring 43, which support is of generally cylindrical form and conveniently is made of moulded plastics material. This support 42 is located within a cylindrical bore in the body member 10, the bore in the body member in Figure 4 being larger than in the arrangement of Figure 1 in order to accommodate this support. The body member 10 has a radially extending key 44 to engage a co-operating recess 45 in the support 42 to prevent rotation of the support in the body member. The support is sealed to the body member by means of an O-ring 46 in an annular recess 47 around the outer surface of the support. The annular element 30 in this embodiment serves to compress the O-ring 43 against a shoulder 48 formed in the support so thereby causing the O-ring 43 to be brought into tight sealing engagement with the tube 12 and also to be sealed tightly against the shoulder 48 and surrounding cylindrical surface 49 of the support 42.

The arrangement of Figure 4, compared with that of Figure 1, has the advantage that, if the coupling is used for a tube carrying a high pressure fluid, any leakage of fluid around the end of the tube 12 will cause pressure to be built up on the inner end surface of the support 42 and will thus tend to force the support 42 outwardly in the axial direction thereby tending to move the collet outwardly and so thereby causing the collet arms to be forced more tightly into engagement with the tube 12. The sealing against the surface of the tube is effected as before with the O-ring 43 whilst the O-ring 46 provides the sealing between the support and the body member 10. This latter seal presents much less of a problem than the sealing against the tube because the support and body member have preformed surfaces which are defined in the construction of the coupling whereas the tube would in many cases, have irregularities on its surface.

In the construction of Figure 1, in which the compression ring runs in the housing, the collet can be released fairly easily under pressure. If, as in Figure 4, the compression ring runs in a sub-assembly which exerts pressure on the collet when the tube is under pressure, it is harder to release the collet under pressure. In this case, it may sometimes be preferred to form a back stop in the housing. Such a construction is shown in Figure 5 which shows a construction similar to Figure 4 but with a back stop 148 which limits the outward movement of the collet. In Figure 5 the same reference characters are used as in Figure 4 for corresponding features and the construction and operation will be clear from the previous description.

Referring to Figure 6, there is shown part of a tube coupling comprising a body member 50 having a bore 51 therethrough. A tube 52 shown in chain lines is insertable into the coupling from the right-hand end thereof as seen in the drawing to be gripped by a collet 53 which has a cylindrical portion 54 terminated at its outer end by a flange 55 and resilient arms 56 extending axially inwardly into said body member from the cylindrical portion 55. In the particular embodiment illustrated, there are six such arms. These arms each have a projection 57 on their inner surface, the projection 57 lying in a plane normal to the axis of the collet. These projections serve to grip the tube 52. The collet may be made of metal or of plastics material; in the latter case, the projections 57 may be constituted by metal inserts. On their outer face, the collet arms 56 have a portion 59, the diameter of which increases in the axial direction into the coupling to form a tapered surface co-operating with a tapered surface 60 on the coupling member 50 such that, if the collet is moved outwardly, the collet arms are forced radially inwardly to grip the tube 52.

The tube 52 is inserted through the outer end of the collet, the right-hand end of the drawing, to extend through the collet and to abut against a shoulder 65 formed in the coupling member 50. This shoulder forming a stop for the tube is constituted by the end of an enlarged diameter portion 66 of the bore 51. The internal diameter of this portion of the coupling member is made just sufficient to accommodate the tube. The collet fits in a still larger diameter part 67 of the member 50 which part is terminated by a second shoulder 68 and a resilient O-ring 69 is provided in the coupling member around the tube adjacent this shoulder 68.

A spring washer 70 is provided between the O-ring 69 and the inner ends of the collet arms to compress the O-ring against the shoulder 68. This spring washer has an annular portion 71 lying in a plane generally normal to the axis of the tube and collet and bearing against the O-ring 69. At its radially inner end, this portion 71 has integral spring portions 72 which extend radially and axially outwardly from the surface 71 to bear against the ends of the collet arms 56. The spring washer 70 is so dimensioned that, when the collet 53 is put in position in the member 50, the spring is under compression so compressing the O-ring 69 in the axial direction. The seal is thus forced against the shoulder 68 and is also caused to expand inwardly against the surface of the tube 52 and outwardly against the enlarged bore portion 67 of the member 50. The spring washer 70 thus serves to deform the O-ring 69 to give improved sealing between that O-ring and the outer surface of the tube and between the O-ring and the surfaces of the member 50.

The resilience of the spring washer 70 permits of the forcing of the collet 53 inwardly into the member 50 when it is required to release a tube from the coupling, the collet arms 56 moving outwardly because of their own resilience and the ends of these arms riding smoothly over the rounded abutments constituted by the turned-over edges of the aforementioned integral spring portions 72 of the washer.

In the construction of Figure 6, the spring 70 which exerts pressure on the O-ring 69 may be inserted before a swaging operation on the body of the coupling. Alternatively the internal diameter of the swaged body may be made larger than that illustrated so that the spring and O-ring can be inserted after the body has been formed, e.g. swaged to the required shape. A collet of suitably larger size would then have to be employed. In yet another arrangement the spring is a split-spring washer so that it can be introduced through the reduced diameter part of the body.

**Claims**

1. A releasable tube coupling having a collet (13) with axially extending resilient arms (16) arranged to co-operate with a cam surface (20) on a body member (10) surrounding the collet, which cam surface (20) is tapered to a smaller diameter in an axial direction and engages the arms (16) of the collet (13) so that the collet arms are forced radially inwardly by axial movement of the collet (13) in said axial direction whereby projections (19) on the arms grip a tube (12) inserted in the coupling and the collet arms being releasable to move radially outwardly by movement of the collet in the opposite axial direction; and a resilient annular member (29, Fig. 1 or 43, Figs. 4, 5) in said body member for sealing around the tube (12) characterised in that said one direction is the direction of withdrawal of the tube from the body member and in that a threaded element (30) engaging an internal thread in said body member (10) or in a support (42) in said body member is provided for applying pressure to and maintaining pressure on said annular resilient member (29 or 43) to compress it in the axial direction and so thereby deforming it radially inwardly, the threaded element being separate from the collet (13) but engageable thereby so that the threaded element can be rotated by rotation of the collet.

2. A tube coupling as claimed in claim 1 and having a tube (12) inserted through said collet (13) and said resilient member (29 or 43), characterised in that the resilient member has an internal diameter such that the axial compression deforms it inwardly into tight engagement with the outer surface of the tube (12).

3. A tube coupling as claimed in either claim 1 or claim 2 characterised in that said annular resilient member (29 or 43) is between the collet (13) and an internal shoulder (28, Fig. 1 or 48, Figs. 4, 5) on the body member (10) or on said support (42) in the body member (10) for the annular resilient member (29 or 43) and in that said annular element (30) is adjustably secured in said body member (10) or support (42) so that the annular element can be positioned to hold the annular resilient member (29 or 43) in compression against said shoulder (28 or 48).

4. A tube coupling as claimed in any of the preceding claims characterised in that the collet (13) and annular element (30) are provided with mutually-engaging portions (17, 18; 35, 36) such that the annular element (30) can be rotated in said body member (10) or in said support (42) by rotation of the collet (13).

5. A tube coupling as claimed in claim 4 characterised in that the annular element (30) has a castellated end and the collet arms (17, 18) are formed to engage in the castellations.

6. A tube coupling as claimed in claim 4 characterised in that alternate arms (17, 18) of the collet are of different length and the castellations (35, 36) comprise recesses for receiving the longer collet arms.

7. A tube coupling as claimed in any of the preceding claims characterised in that said support is a holder (42) for the annular resilient member (43) and positioned within said body member (10) and wherein the annular element (30) is threaded in said support (42) for adjustment in the axial direction to enable the annular resilient member (43) to be compressed between the annular element (30) and a shoulder (48) in the support, and in that a further seal (46) is provided between the support (42) and said body member (10).

8. A tube coupling as claimed in claim 7 characterised in that the further seal (46) is a further annular resilient member around said support.

9. A tube coupling as claimed in either claim 7 or claim 8 characterised in that said support (42) is axially movable in said body member (10) between a shoulder therein and said collet but is locked against rotation therein.

10. A releasable tube coupling having a collet (53) with axially extending resilient arms (56) arranged to co-operate with a cam surface (60) on a body member (50) surrounding the collet, which cam surface (60) is tapered to a smaller diameter in an axial direction and engages the arms of the collet (53) so that the collet arms are forced radially inwardly by axial movement of the collet (53) in said axial direction whereby projections (57) on the arms grip a tube (52) inserted in the coupling and the collet arms being releasable to move radially outwardly by movement of the collet in the opposite axial direction; and a resilient annular member (69) in said body member for sealing around the tube (52) characterised in that said one direction is the direction of withdrawal of the tube from the body member and in that spring means (70) are provided between the collet (53) and the resilient annular member (69) for applying pressure to and maintaining pressure on said annular resilient member (69) to compress it in the axial direction against a shoulder in said body member (50) and so thereby deforming the resilient annular member radially inwardly.

11. A tube coupling as claimed in claim 10 characterised in that the collet (53), spring means (70) and said member (50) are dimensioned so that, when the collet (53) is inserted in said member (50), said spring means (70) are compressed and so apply axial compression onto the resilient annular member (69).

12. A tube coupling as claimed in either claim 10 or claim 11 characterised in that said spring means comprise a spring washer (70) having an annular surface (71) extending continuously around the tube in a plane normal to the axis thereof, said surfaces being arranged to bear against the resilient annular member (69), and in that the spring washer further has resilient portions (72) extending from this surface to bear against the end surfaces of the collet arms (56).

## Revendications

1. Raccord de tube démontable comprenant un collet (13) muni de bras élastiques (16) orientés axialement, agencés pour coopérer avec une surface de came (20) prévue sur un corps (10) qui entoure le collet, laquelle surface de came (20) se rétrécit jusqu'à un plus petit diamètre dans un premier sens axial et attaque les bras (16) du collet (13) de manière que lesdits bras soient repoussés à force radialement vers l'intérieur par le mouvement axial du collet (13) dans ledit premier sens axial, de sorte que des saillies (19) prévues sur les bras serrent un tube (12) inséré dans le raccord, les bras du collet pouvant être libérés pour se déplacer radialement vers l'extérieur par le mouvement du collet dans le sens axial opposé, un élément annulaire élastique (29, 43) étant prévu dans ledit corps pour former un joint étanche autour du tube (12), caractérisé en ce que ledit premier sens est le sens de l'extraction du tube du corps et en ce qu'un élément fileté (30), qui coopère avec un filetage intérieur prévu dans ledit corps (10) ou dans un support (42) logé dans ledit corps, est prévu pour appliquer et maintenir une pression sur ledit élément élastique annulaire (29 ou 43) pour le comprimer dans la direction axiale et, de cette façon, le déformer radialement vers l'intérieur, l'élément fileté étant séparé du collet (13) et pouvant être mis en prise avec celui-ci de manière qui l'élément fileté puisse être mis en rotation par la rotation du collet.

2. Raccord de tube selon la revendication 1, et comprenant un tube (12) inséré à travers ledit collet (13) et ledit élément élastique (29 ou 43), caractérisé en ce que l'élément élastique possède un diamètre intérieur tel que la compression axiale le déforme vers l'intérieur en le mettant en contact étroit avec la surface externe du tube (12).

3. Raccord de tube selon l'une des revendications 1 et 2, caractérisé en ce que ledit élément élastique annulaire (29 ou 43) est placé entre le collet (13) et un épaulement intérieur (28, 48) prévu sur le corps (8) ou sur ledit support (42) placé dans le corps (8), et en ce que ledit élément annulaire (30) est fixé en position réglable dans ledit corps (10) ou dans le support (42), de manière qu'il puisse être positionné pour maintenir l'élément élastique annulaire (29 ou 43) en compression contre ledit épaulement (28 ou 48).

4. Raccord de tube selon l'une des revendications précédentes, caractérisé en ce que le collet (13) et l'élément annulaire (30) sont munis de portions (17, 18; 35, 36) qui entrent en prise entre elles, de manière que l'élément annulaire (30) puisse être mis en rotation dans ledit corps (10) ou dans ledit support (42) par la rotation du collet (13).

5. Raccord de tube selon la revendication 4, caractérisé en ce que l'élément annulaire (30) possède une extrémité crénelée et les bras (17, 18) du collet sont formés pour s'engager dans les crénelures.

6. Raccord de tube selon la revendication 4, caractérisé en ce que les bras pairs et impairs (17, 18) du collet sont de différentes longueurs et en ce que les crénelures (35, 36) comprennent des évidements pour recevoir les bras longs du collet.

7. Raccord de tube selon l'une des revendications précédentes, caractérisé en ce que ledit support est un organe de retenue (42) pour l'élément élastique annulaire (43) et est positionné dans ledit corps (10), en ce que l'élément annulaire (30) est vissé dans ledit support (42) pour le réglage dans la direction axiale, assurant ainsi la compression de l'élément élastique annulaire (43) entre l'élément annulaire (30) et un épaulement (48) prévu dans le support et en ce qu'une autre garniture d'étanchéité (46) est prévue entre le support (42) et ledit corps (10).

8. Raccord de tube selon la revendication 7, caractérisé en ce que l'autre garniture d'étanchéité (46) est constitué par un autre élément élastique annulaire entourant ledit support.

9. Raccord de tube selon l'une des revendications 7 et 8, caractérisé en ce que ledit support (42) peut se déplacer axialement dans ledit corps (10), entre un épaulement ménagé dans ce dernier et ledit collet, mais est bloqué contre la rotation dans le corps.

10. Raccord de tube démontable comprenant un collet (53) muni de bras élastiques (56) orientés axialement, agencés pour coopérer avec une surface de came (60) prévue sur un corps (50) qui entoure le collet, laquelle surface de came (60) se rétrécit jusqu'à un diamètre plus petit dans un premier sens axial et attaque les bras du collet (53), de manière que les bras du collet soient repoussés à force radialement vers l'intérieur par le mouvement axial du collet (53) dans ledit premier sens axial, de sorte que des saillies (57) prévues sur les bras serrent un tube (52) inséré dans le raccord et que les bras du collet peuvent être dégagés, pour se déplacer radialement vers l'extérieur, par un mouvement du collet dans le sens axial opposé, un élément annulaire élastique (59) étant placé dans ledit corps pouf former un joint étanche autour du tube (52), caractérisé en ce que ledit premier sens est le sens de l'extraction du tube hors du corps et en ce que des moyens élastiques (70) sont prévus entre le collet (53) et l'élément annulaire élastique (69) pour exercer et maintenir une pression sur ledit élément élastique annulaire (69) pour le comprimer dans la direction axiale contre un épaulement ménagé dans ledit corps (50) et déformer ainsi l'élément annulaire élastique radialement vers l'intérieur.

11. Raccord de tube selon la revendication 10, caractérisé en ce que le collet (53), les moyens élastiques (70) et ledit corps (50) sont dimensionnés de manière que, lorsque le collet (53) est inséré dans le corps (50), lesdits moyens élastiques (70) soient comprimés et, de cette façon, appliquent une compression axiale sur l'élément annulaire élastique (69).

12. Raccord de tube selon l'une des revendications 10 et 11, caractérisé en ce que lesdits moyens élastiques comprennent une rondelle élastique (70) ayant une surface annulaire (71) qui s'étend sans interruption autour du tube, dans un plan perpendiculaire à son axe, ladite surface étant agencée pour porter contre l'élément annulaire élastique (69) et en ce que la rondelle élastique possède en outre des portions élastiques (72) qui font saillie sur cette surface pour porter contre les surfaces terminales des bras (56) du collet.

## Patentansprüche

1. Lösbare Rohrkupplung mit einer Spannhülse (13) mit sich axial erstreckenden elastischen Armen (16), die so angeordnet sind, daß sie mit einer Nockenfläche (20) am Kupplungskörper (10), welche die Spannhülse umgibt, zusammenwirken, wobei die Nockenfläche in eine axiale Richtung enger wird und mit den Armen (16) der Spannhülse (13) so in Eingriff kommt, daß durch axiale Bewegungen der Spannhülse (13) in die eine axiale Richtung die Spannhülsenarme radial nach innen gedrückt werden, wodurch Vorsprünge (19) auf den Armen ein in die Kupplung eingeführtes Rohr (12) ergreifen, und wobei die Spannhülsenarme lösbar sind, um sich bei Bewegung der Spannhülse in die entgegengesetzte axiale Richtung radial nach außen zu bewegen; und mit einem elastischen ringförmigen Teil (29, Fig. 1 oder 43, Fig. 4, 5) im Kupplungskörper für eine abdichtende Anlage um das Rohr (12), dadurch gekennzeichnet, daß die eine Richtung die Herausziehrichtung des Rohres aus dem Kupplungskörper ist, und daß ein mit Gewinde versehenes Teil (30), welches mit einem Innengewinde in dem Kupplungskörper (10) oder einem Halteteil (42) im Kupplungskörper zusammenwirkt, vorgesehen ist, um Druck auf das ringförmige elastische Teil (29 oder 43) auszuüben und aufrecht zu erhalten, um es in axialer Richtung zusammenzudrücken und es dadurch radial nach innen zu verformen, wobei das mit Gewinde versehene Teil (30) von der Spannhülse (13) getrennt ist, aber in Eingriff damit ge-

bracht werden kann, so daß das Gewindeteil (30) durch Drehung der Spannhülse gedreht werden kann.

2. Rohrkupplung nach Anspruch 1, mit einem durch die Spannhülse (13) und das elastische Teil (29 oder 43) eingeführten Rohr (12), dadurch gekennzeichnet, daß das elastische Teil einen solchen Innendurchmesser hat, daß das axiale Zusammendrücken es nach innen verformt zu einem dichten Kontakt mit der Außenfläche des Rohres (12).

3. Rohrkupplung nach Anspruch 1 oder 2, dadurch gekennzeichnet, daß das ringförmige elastische Teil (29 oder 43) zwischen der Spannhülse (13) und einer inneren Schulter (28 Fig. 1, oder 48 Fig. 4, 5) auf dem Kupplungskörper (10) oder auf dem Halteteil (42) im Kupplungskörper (10) für das ringförmige elastische Teil (29 oder 43) vorgesehen ist und daß das ringförmige Teil (30) im Kupplungskörper (10) oder dem Halteteil (42) einstellbar befestigt ist, so daß das ringförmige Teil so positioniert werden kann, daß es das ringförmige elastische Teil (29 oder 43) unter Kompression gegen die Schulter (28 oder 48) hält.

4. Rohrkupplung nach einem der vorangehenden Ansprüche, dadurch gekennzeichnet, daß die Spannhülse (13) und das ringförmige Element (30) mit ineinander eingreifenden Teilen (17, 18; 35, 36) versehen sind, so daß das ringförmige Teil (30) im Kupplungskörper (10) oder dem Halteteil (42) durch Drehung der Spannhülse (13) gedreht werden kann.

5. Rohrkupplung nach Anspruch 4, dadurch gekennzeichnet, daß das ringförmige Teil (30) ein Zackenende hat und daß die Spannhülsenarme (17, 18) so ausgebildet sind, daß sie in die Zacken eingreifen.

6. Rohrkupplung nach Anspruch 4, dadurch gekennzeichnet, daß die Spannhülsenarme (17, 18) abwechselnd unterschiedliche Länge haben und die Zacken (35, 36) Ausnehmungen aufweisen zum Aufnehmen der längeren Spannhülsenarme.

7. Rohrkupplung nach einem der vorangehenden Ansprüche, dadurch gekennzeichnet, daß das Halteteil eine Halterung (42) für das ringförmige elastische Teil (43) ist und im Kupplungskörper (10) angeordnet ist, und daß das ringförmige Teil (30) in das Halteteil (42) eingeschraubt ist zum Einstellen in axialer Richtung, um zu ermöglichen, daß das ringförmige elastische Teil (43) zwischen dem ringförmigen Teil (30) und einer Schulter (48) am Halteteil zusammengedrückt wird, und daß eine weitere Dichtung (46) zwischen dem Halteteil (42) und dem Kupplungskörper (10) vorgesehen ist.

8. Rohrkupplung nach Anspruch 7, dadurch gekennzeichnet, daß die zusätzliche Dichtung (46) ein weiteres ringförmiges elastisches Teil um das Halteteil ist.

9. Rohrkupplung nach einem der Ansprüche 7 oder 8, dadurch gekennzeichnet, daß das Halteteil (42) im Kupplungskörper (10) zwischen einer Schulter darin und der Spannhülse axiale bewegbar ist, aber gegen Drehung darin gesperrt ist.

10. Lösbare Rohrkupplung mit einer Spannhülse (53) mit sich axial erstreckenden elastischen Armen (56), die so angeordnet sind, daß sie mit einer Nockenfläche (60) am Kupplungskörper (50), welche die Spannhülse umgibt, zusammenwirken, wobei die Nockenfläche (60) in eine axiale Richtung im Durchmesser enger wird und mit den Armen der Spannhülse (53) so in Eingriff kommt, daß durch axiale Bewegung der Spannhülse (53) in die eine axiale Richtung die Spannhülsenarme radial nach innen gedrückt werden, wodurch Vorsprünge (57) auf den Armen ein in die Kupplung eingeführtes Rohr (52) ergreifen, und wobei die Spannhülsenarme lösbar sind, um sich bei Bewegung der Spannhülse in die entgegengesetzte axiale Richtung radial nach außen zu bewegen; und mit einem elastischen ringförmigen Teil (69) im Kupplungskörper für eine abdichtende Anlage um das Rohr (52), dadurch gekennzeichnet, daß die eine Richtung die Herausziehrichtung des Rohres aus dem Kupplungskörper ist, und daß eine Federvorrichtung (70) zwischen der Spannhülse (53) und dem elastischen ringförmigen Zeil (69) vorgesehen ist, um Druck auf das ringförmige elastische Teil (69) auszuüben und aufrecht zu erhalten, um es in axialer Richtung gegen eine Schulter im Kupplungskörper (50) zusammenzudrücken und dadurch das elastische ringförmige Teil radial nach innen zu verformen.

11. Rohrkupplung nach Anspruch 10, dadurch gekennzeichnet, daß die Spannhülse (53), die Federvorrichtung (70) und der Körper (50) so dimensioniert sind, daß, wenn die Spannhülse (53) in der Körper (50) eingeführt ist, die Federvorrichtung zusammengedrückt wird und so auf das elastische ringförmige Teil (69) eine axiale Kompression ausübt.

12. Rohrkupplung nach einem der Ansprüche 10 oder 11, dadurch gekennzeichnet, daß die Federvorrichtung einen Federring (70) aufweist, der eine ringförmige Oberfläche (71) hat, die sich durchgehend um das Rohr in einer zu dessen Achse senkrechten Ebene erstreckt, wobei die Oberfläche so angeordnet ist, daß sie am elastischen ringförmigen Teil (69) anliegt und daß der Federring ferner federnde Teile (72) aufweist, die sich von der Oberfläche aus erstrecken, um an den Endflächen der Spannhülsenarme (56) anzuliegen.

FIG. 1.

FIG. 2.

FIG. 3.

0 021 795

FIG. 4.

FIG. 5.

FIG. 6.